# EUROPEAN PATENT APPLICATION

(11) **EP 4 391 412 A1**
(43) Date of publication of application: **26.06.2024**
(21) Application number: 22216602.7
(22) Date of filing: 23.12.2022
(51) Int. Cl.: H04B 7/155

(54) **A NETWORK-CONTROLLED REPEATER**

(71) Applicant: Nokia Solutions and Networks Oy, 02610 Espoo (FI)
(72) Inventor: OLESEN, Poul, 9220 Aalborg Øst (DK); KAPURUHAMY BADALGE, Shashika Manosha, 90650 Oulu (FI); ROM, Christian, 9220 Aalborg Øst (DK); SVENDSEN, Simon, 9220 Aalborg Øst (DK)
(74) Representative: Swindell & Pearson Limited

(57) **Abstract**

A network-controlled repeater comprising:
a first transmission pathway for amplifying a first signal received from at least a first antenna port and transmitted by at least a second antenna port;
a second transmission pathway for amplifying a second signal received from at least the second antenna port and transmitted by at least the first antenna port;
means for self-interference cancelling comprising:
a feedback pathway to modify the first signal associated with the first transmission pathway; and
a controller comprising:
means for causing the first signal to be propagated and amplified along the first transmission pathway;
means for causing the second signal to be propagated and amplified along the second transmission pathway; and
means for causing a self-interference cancelling signal to be propagated along the feedback pathway to modify the first signal associated with the first transmission pathway;

wherein the second transmission pathway is reused for the feedback pathway.

## Description

### TECHNOLOGICAL FIELD

Examples of the disclosure relate to a network-controlled repeater.

### BACKGROUND

A repeater is an electronic device that receives a signal and retransmits it. Repeaters are used to extend transmissions so that the signal can cover longer distances or be received on the other side of an obstruction. A signal transmitted by a repeater can be received by the repeater leading to self-interference.

A repeater can be a bi-directional repeater that operates as a repeater in two directions. Such a bi-directional repeater comprises a first transmission pathway for amplifying a signal received from a first direction before re-transmission and a second transmission pathway for amplifying a signal received from a second direction before re-transmission.

In current radio telecommunication systems self-interference can be cancelled using digital processing to remove or reduce the effects of the self-interference. However, this uses significant digital processing resources that are not necessarily available at a repeater.

### BRIEF SUMMARY

According to various, but not necessarily all, examples, there is provided a network-controlled repeater comprising:
a first transmission pathway for amplifying a first signal received from at least a first antenna port and transmitted by at least a second antenna port;
a second transmission pathway for amplifying a second signal received from at least the second antenna port and transmitted by at least the first antenna port;
means for self-interference cancelling comprising:
   a feedback pathway to modify the first signal associated with the first transmission pathway; and
a controller comprising:
   means for causing the first signal to be propagated and amplified along the first transmission pathway;
   means for causing the second signal to be propagated and amplified along the second transmission pathway; and
   means for causing a self-interference cancelling signal to be propagated along the feedback pathway to modify the first signal associated with the first transmission pathway;
wherein the second transmission pathway is reused for the feedback pathway.

According to various, but not necessarily all, examples, the controller is configured to control a relative phase between the first signal and the self-interference cancelling signal.

According to various, but not necessarily all, examples, the controller is configured to control the relative phase between the first signal and the self-interference cancelling signal, wherein the control of the relative phase comprises controlling a phase of the first signal and/or a phase of the self-interference cancelling signal.

According to various, but not necessarily all, examples, the controller is configured to control a phase control means in the feedback pathway and/or is configured to control a phase control means in the transmission pathway.

According to various, but not necessarily all, examples, the controller is configured to control an amplitude of the self-interference cancelling signal in the feedback pathway.

According to various, but not necessarily all, examples, the controller is configured to independently control a relative phase between the first signal and the self-interference cancelling signal and an amplitude of the self-interference cancelling signal to produce self-interference cancelation.

According to various, but not necessarily all, examples, the controller is configured to control a relative phase between the first signal and the self-interference cancelling signal and an amplitude of the self-interference cancelling signal to optimise self-interference cancelation.

According to various, but not necessarily all, examples, the repeater is configured to receive a reference signal, and the controller is configured to control self-interference cancelation based on a comparison between the received reference signal and an expected reference signal.

According to various, but not necessarily all, examples, the network-controlled repeater further comprises at least a first antenna element and a second antenna element, and at least a first phase shifter and a second phase shifter, wherein the first phase shifter is configured to control a phase of at least a part of the first signal received by the first antenna element and/or is configured to control at least a part of the second signal transmitted by the first antenna element,
and the second phase shifter is configured to control a phase of at least a part of the first signal transmitted by the second antenna element and/or at least a part of the second signal received by the second antenna element.

According to various, but not necessarily all, examples, the means for causing the first signal to be propagated and amplified comprises at least a first coupler and a second coupler, wherein the first coupler is shared between the first transmission pathway and the second transmission pathway and the second coupler is shared between the first transmission pathway and the second transmission pathway.

According to various, but not necessarily all, examples, the network-controlled repeater further comprises switching circuitry to enable alternate use of the first coupler for out-coupling from the first transmission pathway and in-coupling to the second transmission pathway and, synchronised, alternate use of the second coupler for in-coupling to the first transmission pathway and out-coupling from the second transmission pathway.

According to various, but not necessarily all, examples, the means for self-interference cancelling further comprises a second feedback pathway to modify the second signal associated with the second transmission pathway; wherein the controller further comprises means for causing a second self-interference cancelling signal to be propagated along the second feedback pathway to modify the second signal associated with the second transmission pathway; wherein the first transmission pathway is reused for the second feedback pathway.

According to various, but not necessarily all, examples, during a first time division duplex time slot, the first coupler is configured to out-couple a portion of the first signal into the feedback pathway from the first transmission pathway, and the second coupler is configured to in-couple at least a portion of a self-interference cancelling signal from the feedback pathway into the first transmission pathway and
during a second time division duplex time slot, the second coupler is configured to out-couple a portion of the second signal into a second feedback pathway, and the first coupler is configured to in-couple at least a portion of a self-interference cancelling signal from the second feedback pathway into the second transmission pathway.

According to various, but not necessarily all, examples, the network-controlled repeater further comprises: a third transmission pathway for amplifying a third signal received from at least the first antenna port and transmitted by at least the second antenna port;
a fourth transmission pathway for amplifying a fourth signal received from at least the second antenna port and transmitted by at least the first antenna port; and wherein the means for self-interference cancelling further comprises: a further feedback pathway to modify the third signal associated with the third transmission pathway;
wherein the controller further comprises:
   means for causing the third signal to be propagated and amplified along the third transmission pathway;
   means for causing the fourth signal to be propagated and amplified along the fourth transmission pathway; and
   means for causing a further self-interference cancelling signal to be propagated along the further feedback pathway to modify the third signal associated with the third transmission pathway;
wherein the fourth transmission pathway is reused for the further feedback pathway.

According to various, but not necessarily all, examples, there is provided a network-controlled repeater comprising:
a transmission pathway for amplifying a signal received from at least a first antenna port and transmitted by at least a second antenna port;
means for self-interference cancelling comprising: a feedback pathway to modify the signal associated with the transmission pathway; and
a controller comprising:
   means for causing a signal to be propagated and amplified along the transmission pathway; and
   means for causing a self-interference cancelling signal to be propagated along the feedback pathway to modify the signal associated with the transmission pathway; wherein the means for self-interference cancelling are configured to control the phase of the signal associated with the transmission pathway and the amplitude of the self-interference cancelling signal to produce self-interference cancelation.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
Fig. 1 shows an example of the subject matter described herein;
Fig. 2 shows another example of the subject matter described herein;
Fig. 3 shows another example of the subject matter described herein;
Figs. 4A and 4B show another example of the subject matter described herein;
Fig. 5 shows another example of the subject matter described herein;
Figs. 6A and 6B show another example of the subject matter described herein;
Fig. 7 shows another example of the subject matter described herein;
Fig. 8 shows another example of the subject matter described herein;
Fig. 9 shows another example of the subject matter described herein;
Fig. 10 shows another example of the subject matter described herein; and
Fig. 11 shows another example of the subject matter described herein.

Similar reference numerals are used in the figures to designate similar features. For clarity, all reference numerals are not necessarily displayed in all figures.

### DETAILED DESCRIPTION

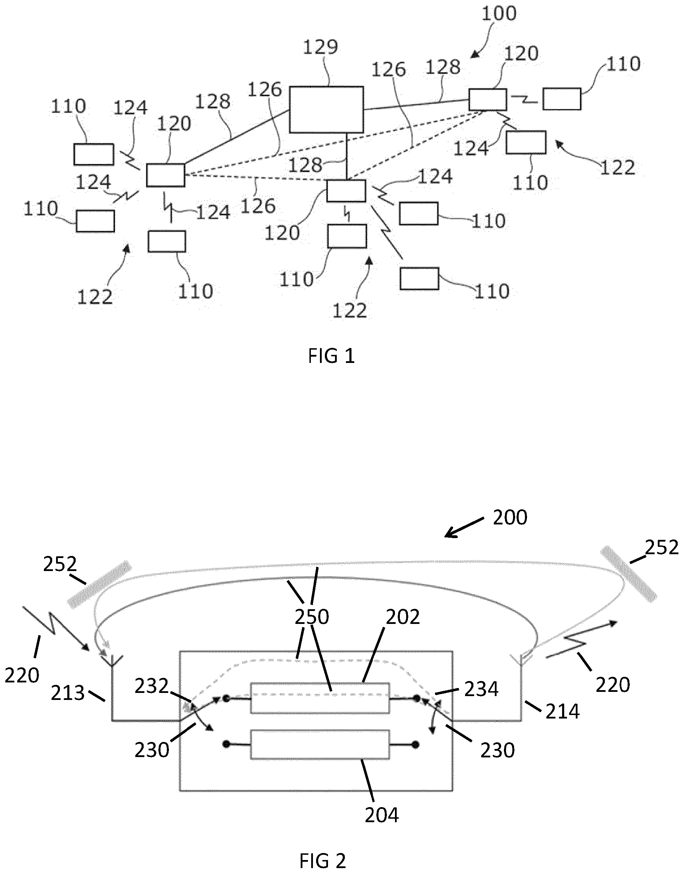

Figure 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The network 100 is in this example a radio telecommunications network, in which at least some of the terminal nodes 110 and access nodes 120 communicate with each other using transmission/reception of radio waves.

The one or more core nodes 129 may, in some examples, communicate with each other. The one or more access nodes 120 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124.

In some examples, the wireless interface 124 comprises at least one repeater.

The access node 120 is a cellular radio transceiver. The terminal nodes 110 are cellular radio transceivers.

In the example illustrated the cellular network 100 is a third generation Partnership Project (3GPP) network in which the terminal nodes 110 are user equipment (UE) and the access nodes 120 are base stations.

In the particular example illustrated the network 100 is an Evolved Universal Terrestrial Radio Access network (E-UTRAN). The E-UTRAN consists of E-UTRAN NodeBs (eNBs) 120, providing the E-UTRA user plane and control plane (RRC) protocol terminations towards the UE 110. The eNBs 120 are interconnected with each other by means of an X2 interface 126. The eNBs are also connected by means of the S1 interface 128 to the Mobility Management Entity (MME) 129.

In other example the network 100 is a Next Generation (or New Radio, NR) Radio Access network (NG-RAN). The NG-RAN consists of gNode-Bs (gNBs) 120, providing the user plane and control plane (RRC) protocol terminations towards the UE 110. The gNBs 120 are interconnected with each other by means of an X2/Xn interface 126. The gNBs are also connected by means of the N2 interface 128 to the Access and Mobility management Function (AMF).

A user equipment comprises a mobile equipment. Where reference is made to user equipment that reference includes and encompasses, wherever possible, a reference to mobile equipment.

Figure 2 illustrates a first example of a network-controlled repeater 200, according to embodiments of the disclosure. The repeater 200 forms part of a network 100. In some examples, a network-controlled repeater 200 is a repeater 200 with advanced capabilities including beamforming and time division duplex (TDD) operation.

The network-controlled repeater 200 comprises a first antenna element 213, a second antenna element 214, a first transmission pathway 202, a second transmission pathway 204, and switching circuitry 230.

The first transmission pathway 202 is configured to amplify a first signal 220 received from at least the first antenna element 213 and transmitted by at least the second antenna element 214. A pathway is a path for an electronic signal. The pathway may be wired. A transmission pathway 202, 204 is a pathway for a transmission signal. A transmission signal is a signal transmitted by the repeater 200.

The second transmission pathway 204 is configured to amplify a second signal (no reference) received from at least the second antenna element 214 and transmitted by at least the first antenna element 213.

The repeater 200 is configured to receive, amplify and forward the first signal 220 and the second signal. In some examples, the repeater 200 is an in-band repeater 200 and the first signal 220 and the second signal are in the same frequency band. The first signal 220 and the second signal may be analog signals. In some examples, the first transmission pathway 202 is for amplifying a first signal 220 having been received from at least a first antenna port and to be transmitted by at least a second antenna port; and the second transmission pathway 204 is for amplifying a second signal having been received from at least the second antenna port and to be transmitted by at least the first antenna port.

Antenna ports are a logical concept related to the physical layer (L1) and an antenna port can be considered a logical antenna. An antenna port represents a specific channel model. The first antenna port may map to a first antenna element. The second antenna port may map to a second antenna element. In some examples, an antenna port can map to more than one antenna element.

The switching circuitry 230 comprises a first switch 232 and a second switch 234. The switching circuitry 230 switches between the first transmission pathway 202 and the second transmission pathway 204, and between amplifying the first signal 220 and amplifying the second signal. The illustrated repeater 200 operates in TDD mode.

The illustrated repeater 200 is shown receiving a first signal 220 from the first antenna element 213, propagating and amplifying the first signal 220 in the first transmission pathway 202, and transmitting the first signal 220 using the second antenna element 214.

Self-interference 250 occurs when the signal 220 transmitted by the transmitting antenna element 214 is received by the receiving antenna element 213 creating noise for the received first signal 220. Self-interference 250 can occur via a number of different routes, for example, as illustrated in fig. 2 including a direct route; a reflected self-interference signal involving one or more reflectors 252, such as walls; and parasitic signal propagation within the repeater 200.

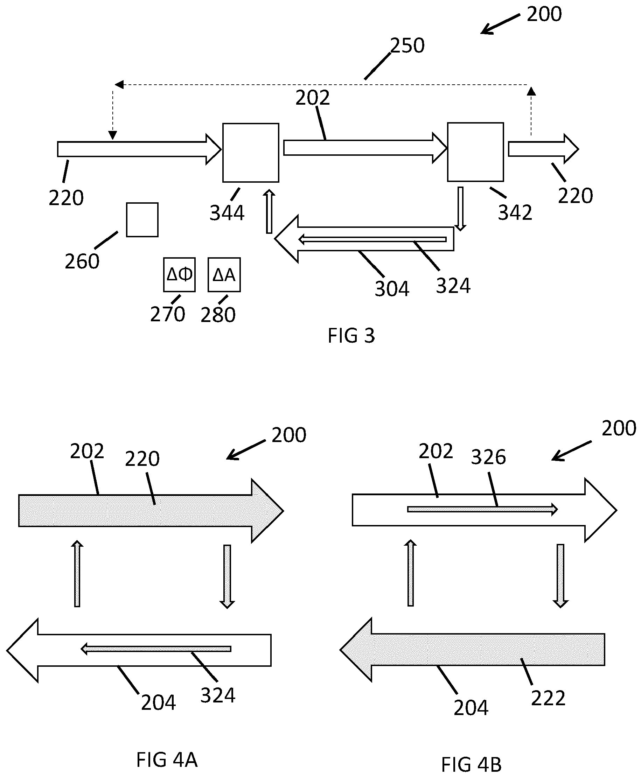

Figure 3 illustrates a second example of a network-controlled repeater 200, according to embodiments of the disclosure. The second example of a network-controlled repeater 200 may comprise some or all of the features of the first example of a network-controlled repeater 200.

The illustrated network-controlled repeater 200 comprises:
a transmission pathway 202 for amplifying a signal 220 received from at least a first antenna port and transmitted by at least a second antenna port;
means for self-interference cancelling comprising: a feedback pathway 304 to modify the signal 220 associated with the transmission pathway 202; and a controller 260.

The illustrated repeater 200 also comprises phase control means 270 and amplitude control means 280.

The controller 260 comprises: means for causing a signal 220 to be propagated and amplified along the transmission pathway 202; and means for causing a self-interference cancelling signal 324 to be propagated along the feedback pathway 304 to modify the signal 220 associated with the transmission pathway 202.

A feedback pathway 304 is a pathway for the self-interference cancelling signal 324. A feedback pathway 304 is configured to provide feedback to a transmission pathway 202, 204.

In some but not necessarily all examples, a transmission pathway that is not currently in use for transmission is reused for the feedback pathway.

In the illustrated example, the transmission pathway is the first transmission pathway 202 and the feedback pathway 304 is the second transmission pathway 204. In this example, the signal is the first signal 220 in the first transmission pathway 202.

However, in other example, the transmission pathway can be the second transmission pathway 204 and the feedback pathway can then be the first transmission pathway 202. In this example, the signal is the second signal in the second transmission pathway 204.

The feedback pathway 304 is configured to modify the signal 220 associated with the transmission pathway 202 to produce self-interference cancellation at least partially cancelling self-interference 250. The self-interference 250 is caused by part of the signal 220 transmitted by a second antenna port being received from at least a first antenna port.

The illustrated repeater 200 comprises a first coupler 342 and second coupler 344. The first coupler 342 is configured to out-couple a portion of the signal 220 into the feedback pathway 304 from the transmission pathway 202. The second coupler 344 is configured to in-couple at least a portion of a self-interference cancelling signal 324 from the feedback pathway 304 into the transmission pathway 202.

The controller 260 is configured to control a relative phase between the signal 220 and the self-interference cancelling signal 324. The control of the relative phase comprises controlling a phase of the signal 220 and/or a phase of the self-interference cancelling signal 324.

In some examples, the repeater 200 comprises phase control means 270 and the controller 260 is configured to control a phase control means 270 in the feedback pathway 304 and/or is configured to control a phase control means 270 in the transmission pathway 202. In some examples, the phase control means 270 is positioned after the couplers 342, 342 in the direction of the signal 220.

In some but not necessarily all examples, the controller 260 is configured to control an amplitude of the self-interference cancelling signal 324 in the feedback pathway 304. The controller 260 is configured to control an amplitude control means 280 in the feedback pathway 304, wherein the amplitude control means 280 comprises at least one amplifier.

In some examples, the controller 260 is configured to independently control a relative phase between the signal 220 and the self-interference cancelling signal 324 and an amplitude of the self-interference cancelling signal 324 to produce self-interference cancelation. In some examples, the controller 260 is configured to control a relative phase between the signal 220 and the self-interference cancelling signal 324 and an amplitude of the self-interference cancelling signal 324 to optimise self-interference cancelation.

In some examples, the controller 260 is configured to control the phase of the signal 220 associated with the transmission pathway 202 and the amplitude of the self-interference cancelling signal 324 to produce self-interference cancelation.

In some examples, such as in figs. 4A to 8, the second transmission pathway 204 is reused for the feedback pathway 304. As such, the feedback pathway 304 is the second transmission pathway 204. In other examples, however, the feedback pathway 304 is separate to the second transmission pathway 204, and the transmission pathway that is not currently in use for transmission is not reused for the feedback pathway.

Figures 4A and 4B illustrate a third example of a network-controlled repeater 200, according to embodiments of the disclosure. The third example of a network-controlled repeater 200 may comprise some or all of the features of the first and second examples of a network-controlled repeater 200.

Figure 4A illustrates operation of the network-controlled repeater 200 at a first time, when the network-controlled repeater 200 amplifies a first signal 220 received from at least a first antenna port and transmitted by at least a second antenna port. Figure 4B illustrates operation of the network-controlled repeater 200 at a different second time when the network-controlled repeater 200 amplifies a second signal 222 received from at least the second antenna port and transmitted by at least the first antenna port. In some examples, at the first time the repeater 200 is operating in a downlink mode and at the second time the repeater 200 is operating in an uplink mode.

In this example, the network-controlled repeater 200 comprises a first transmission pathway 202 for amplifying a first signal 220 received from at least a first antenna port and transmitted by at least a second antenna port; a second transmission pathway 204 for amplifying a second signal 222 received from at least the second antenna port and transmitted by at least the first antenna port; means for self-interference cancelling comprising: a feedback pathway 204 to modify the first signal 220 associated with the first transmission pathway 202; and a controller 260 (not illustrated).

The controller 260 comprising: means for causing the first signal 220 to be propagated and amplified along the first transmission pathway 202 (Fig. 4A); means for causing the second signal 222 to be propagated and amplified along the second transmission pathway 204 (Fig. 4B); and means for causing a self-interference cancelling signal 324 to be propagated along the feedback pathway 204 to modify the first signal 220 associated with the first transmission pathway 202 (Fig. 4A). The second transmission pathway 204 is reused for the feedback pathway 204.

In some examples, the means for self-interference cancelling further comprises a second feedback pathway 202 to modify the second signal 222 associated with the second transmission pathway 204 (Fig. 4B); wherein the controller 260 further comprises means for causing a second self-interference cancelling signal 326 to be propagated along the second feedback pathway 202 to modify the second signal 222 associated with the second transmission pathway 204; wherein the first transmission pathway 202 is reused for the second feedback pathway 202.

By reusing the currently unused transmission pathway 202, 204 for a feedback pathway 204, 202, self-interference cancelation can be achieved without dedicated self-interference cancelation components. Reducing the number of components leads to a less complex and less resource intensive repeater 200.

In fig. 4A, the first signal 220 is propagated along the first transmission pathway 202. A portion of the first signal 220 is out-coupled into the feedback pathway / second transmission pathway 204 from the first transmission pathway 202. This creates the self-interference cancelling signal 324. A portion of the self-interference cancelling signal 324 is in-coupled from the feedback pathway / second transmission pathway 204 into the first transmission pathway 202. The first signal 220 propagates in a first direction, and the self-interference cancelling signal 324 propagates in a second direction opposite to the first direction. The first direction is from the first antenna port to the second antenna port, and the second direction is from the second antenna port to the first antenna port.

In fig. 4B, the second signal 222 is propagated along the second transmission pathway 204. A portion of the second signal 222 is out-coupled into the second feedback pathway / first transmission pathway 202 from the second transmission pathway 204. This creates the second self-interference cancelling signal 326. A portion of the second self-interference cancelling signal 326 is in-coupled from the second feedback pathway / first transmission pathway 202 into the second transmission pathway 204. The second signal 222 propagates in the second direction, and the second self-interference cancelling signal 326 propagates in the first direction opposite to the second direction.

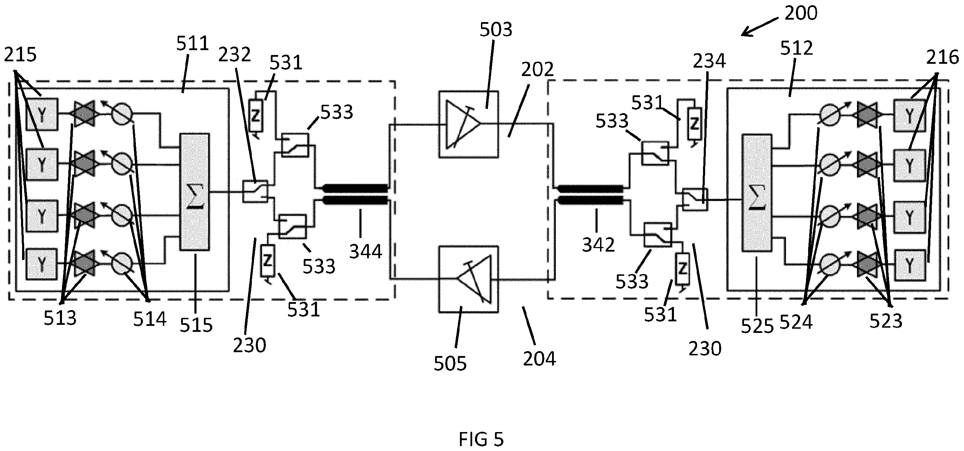

Figure 5 illustrates a fourth example of a network-controlled repeater 200, according to embodiments of the disclosure. The fourth example of a network-controlled repeater 200 may comprise some or all of the features of the first, second and third examples of a network-controlled repeater 200.

The illustrated repeater 200 comprises a first transmission pathway 202, a second transmission pathway 204, a first coupler 342, a second coupler 344, a first antenna panel 511, a second antenna panel 512 and switching circuitry 230.

The first transmission pathway 202 comprises at least a first amplifier 503. The second transmission pathway 204 comprises at least a second amplifier 505.

The means for causing the first signal 220 to be propagated and amplified comprises at least the first coupler 342 and the second coupler 344. The first coupler 342 is shared between the first transmission pathway 202 and the second transmission pathway 204. The second coupler 344 is also shared between the first transmission pathway 202 and the second transmission pathway 204.

In the illustrated example, the first coupler 342 is positioned at a first end of the feedback pathway 204 and the second coupler 344 is positioned at a second end of the feedback pathway 204. The illustrated first coupler 342 and second coupler 344 are directional couplers.

In some examples, the first coupler 342 is configured to couple a portion of the first signal 220 into the feedback pathway 204 to create the self-interference cancelling signal 324, and the second coupler 344 is configured to couple at least a portion of the self-interference cancelling signal 324 into the first transmission pathway 202 to modify the first signal 220.

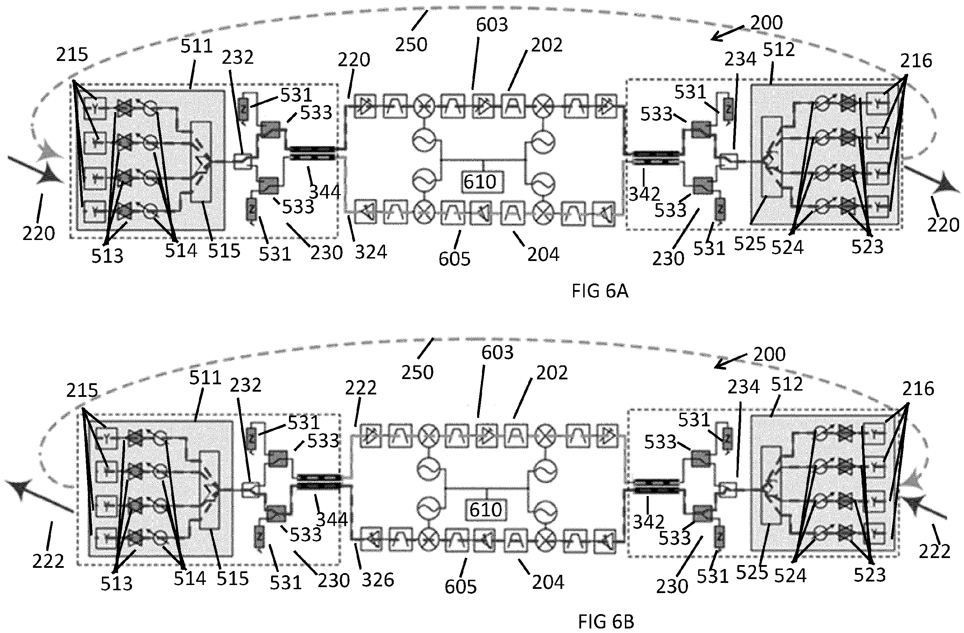

In some but not necessarily all examples, the switching circuitry 230 operates in TDD mode. During a first time division duplex time slot, the first coupler 342 is configured to out-couple a portion of the first signal 220 into the feedback pathway 204 from the first transmission pathway 202, and the second coupler 344 is configured to in-couple at least a portion of a self-interference cancelling signal 324 from the feedback pathway 204 into the first transmission pathway 202. During a second time division duplex time slot, the second coupler 344 is configured to out-couple a portion of the second signal 222 into a second feedback pathway 202, and the first coupler 342 is configured to in-couple at least a portion of a self-interference cancelling signal 326 from the second feedback pathway 202 into the second transmission pathway 204. In some examples, the first time division duplex time slot is for downlink and the second time division duplex time slot is for uplink. Operation in these two time slots is illustrated in figs. 6A and 6B respectively.

In some examples, the switching circuitry 230 enables alternate use of the first coupler 342 for out-coupling from the first transmission pathway 202 and in-coupling to the second transmission pathway 204 and, synchronised, alternate use of the second coupler 344 for in-coupling to the first transmission pathway 202 and out-coupling from the second transmission pathway 204.

In some examples, the switching circuitry 230 is for switching between propagating the first signal 220 in a first direction, and propagating the second signal 222 in a second direction opposite to the first direction. The first direction is from the first antenna port 215 to the second antenna port 216, and the second direction is from the second antenna port 216 to the first antenna port 215.

In the illustrated example, in the first direction the second coupler 344 is positioned before the first coupler 342, and the switching circuitry 230 comprises, at least one first switch 232 positioned before the second coupler 344 and at least one second switch 234 positioned after the first coupler 342. The first switch 232 and second switch 234 are positioned outside the couplers 342, 344.

In the illustrated example, the switching circuitry 230 further comprises for each of the first transmission pathway 202 and the second transmission pathway 204, at both ends of the first transmission pathway 202 and the second transmission pathway 204, a switch 533 between a pathway to an antenna port 215, 216 and a pathway to a terminator 531. The terminator 531 can comprise a resistor. The terminators 531 are configured to reduce or eliminate reflections. In some examples, the switches 232, 234, 532 are radio frequency, RF, switches, such as single pole double throw (SPDT) switches.

The repeater 200 comprises a first antenna port 215 for at least a first antenna element 213 and a second antenna port 216 for at least a second antenna element 214.

In some examples, the repeater 200 comprises at least a first phase shifter 514 and a second phase shifter 524. The first phase shifter 514 is configured to control a phase of at least a part of the first signal 220 received by the first antenna element 213 and/or is configured to control at least a part of the second signal 222 transmitted by the first antenna element 213. The second phase shifter 524 is configured to control a phase of at least a part of the first signal 220 transmitted by the second antenna element 214 and/or at least a part of the second signal 222 received by the second antenna element 214. As such, the first phase shifter 514 is associated with the first antenna port 215 and the first antenna element 213; and the second phase shifter 524 is associated with the second antenna port 216 and the second antenna element 214. In some examples, the first phase shifter 514 and the second phase shifter 524 are for beamforming and may be vector modulators. The phase control means 270 of fig. 3 may comprise the first phase shifter 514 and/or the second phase shifter 524 of fig. 5.

The first antenna panel 511 comprises the first antenna element 213, the first antenna port 215 and the first phase shifter 514. The second antenna panel 512 comprises the second antenna element 214, the second antenna port 216 and the second phase shifter 524.

In some examples, controlling the phase of the first signal 220 to optimise the self-interference cancelation is performed using at least a second phase shifter 524. That is, controlling the phase of the first signal 220 to optimise the self-interference cancelation is performed using a phase shifter 524 associated with a transmitting antenna element 214.

In some examples, the controller 260 is configured to control the phase of the first signal 220 downstream of the first coupler 342 and the second coupler 344 and/or downstream of the switching circuitry 230. Downstream is further on in the first direction. The controller 260 is configured to control the phase of the first signal 220 after the couplers 342, 342 and/or the switching circuitry 230 in the direction of the first signal 220.

The relative phase differences between the phase-shifters 514, 524 within an antenna panel 511, 512 are used to control the beam configuration of the antenna array of antenna elements 213, 214.

The absolute phase of the transmitted signal 220, 222 can be changed by changing the absolute phase on all the phase-shifters 514, 524, while maintaining their relative phase differences.

The illustrated first antenna panel 511 and second antenna panel 512 both comprise a plurality of amplifiers 513, 523; a respective amplifier 513, 523 of the plurality of respective amplifiers 513, 523 being configured to control an amplitude of a signal transmitted and/or received by the respective antenna element 213, 214. An antenna element 213, 214 may use a different amplifier 513, 523 when transmitting or receiving a signal. For example, a low noise amplifier 513, 523 for reception, and a power amplifier 513, 523 for transmission. The illustrated first antenna panel 511 and second antenna panel 512 also both comprise a splitter / combiner 515, 525 to split or combine the respective signals transmitted and/or received by the respective antenna elements 213, 214.

In some examples, the first antenna element 213 is for connecting to a backhaul portion of a telecommunications network 100, wherein the first signal 220 is a downlink signal received from at least the first antenna port 215 and transmitted onward via at least the second antenna port 216, and the second antenna element 214 is for connecting to an access portion of the telecommunications network 100 wherein the second signal 222 is an uplink signal received from at least the second antenna port 216 and transmitted onward via at least the first antenna port 215.

The backhaul portion of a telecommunications network 100 comprises at least one link between a core network of the telecommunications network 100 and the access portion of the telecommunications network 100. The access portion of a telecommunications network 100 comprises at least one link between the backhaul portion of the telecommunications network 100 and terminal nodes / user equipment 110 of the telecommunications network 100.

Figures 6A and 6B illustrate a fifth example of a network-controlled repeater 200, according to embodiments of the disclosure. The fifth example of a network-controlled repeater 200 may comprise some or all of the features of the first, second, third and fourth examples of a network-controlled repeater 200.

Figure 6A illustrates the repeater 200 in a first mode in which the first signal 220 is propagated and amplified along the first transmission pathway 202, and the first self-interference cancelling signal 324 is propagated and amplified along the second transmission pathway 204. This may be during the first TDD time slot. Figure 6B illustrates the repeater 200 in a second mode in which the second signal 222 is propagated and amplified along the second transmission pathway 204, and the second self-interference cancelling signal 326 is propagated and amplified along the first transmission pathway 202. This may be during the second TDD time slot.

The fifth example of a network-controlled repeater 200 is similar to the fourth example of a network-controlled repeater 200, with a number of differences.

In the illustrated example, the first transmission pathway 202 and the second transmission pathway 204 each comprise superheterodyne circuitry 603, 605. The superheterodyne circuitry 603, 605 comprises amplifiers, mixers, oscillators 610 and filters. In some examples, the superheterodyne circuitry 603, 605 comprises at least one low-pass filter or band-pass filter for down-conversion of the signal 220, 222, and at least one high-pass filter or band-pass filter for up-conversion of the signal 220, 222.

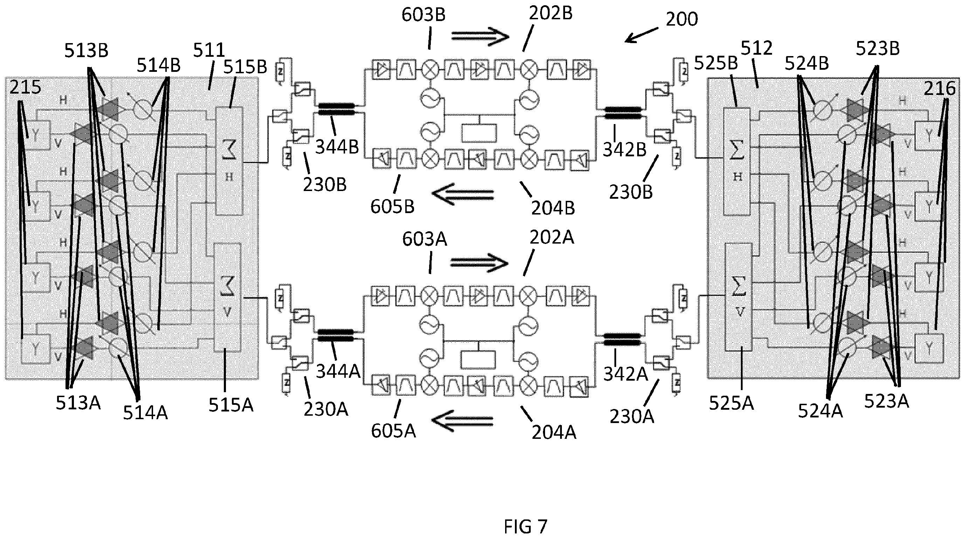

Figure 7 illustrates a sixth example of a network-controlled repeater 200, according to embodiments of the disclosure. The sixth example of a network-controlled repeater 200 may comprise some or all of the features of the first, second, third, fourth and fifth examples of a network-controlled repeater 200.

The sixth example of a network-controlled repeater 200 is similar to the fifth example of a network-controlled repeater 200, with a number of differences.

The illustrated repeater 200 is configured to amplify signals of two different characteristics, such as, for example, polarization. The polarization can be horizontal (H) and vertical (V) or, as another example, left and right circular. In fig. 7 the repeater 200 comprises two sets of components. Components for one of the two signal characteristics include an 'A' at the end of the reference numeral; and components for the other of the two signal characteristics include a 'B' at the end of the reference numeral. In the illustrated example, the antenna ports 215, 216 and antenna elements 213, 214 are used for both polarisations.

In some examples, the repeater 200 further comprises: a third transmission pathway 202B for amplifying a third signal received from at least the first antenna port 215 and transmitted by at least the second antenna port 216; a fourth transmission pathway 204B for amplifying a fourth signal received from at least the second antenna port 216 and transmitted by at least the first antenna port 215. The means for self-interference cancelling further comprises: a further feedback pathway 204B to modify the third signal associated with the third transmission pathway 202B. The controller 260 further comprises: means for causing the third signal to be propagated and amplified along the third transmission pathway 202B; means for causing the fourth signal to be propagated and amplified along the fourth transmission pathway 204B; and means for causing a further self-interference cancelling signal 324 to be propagated along the further feedback pathway 204B to modify the third signal associated with the third transmission pathway 202B. In this example, the fourth transmission pathway 204B is reused for the further feedback pathway 204b. In some examples, the first and second signals 220, 222 are of a first polarisation, and the third and fourth signals 220, 222 are of a second polarisation different to the first polarisation.

The illustrated repeater 200 also comprises additional couplers 342B, 344B, an additional switching means 230B, an additional splitter / combiner 515B, 525B, additional phase shifters 514B, 524B, and additional amplifiers 513B, 523B. There is one set of couplers 342A, 344A, 342B, 344B, switching means 230A, 230B, transmission pathways 202A, 204A, 202B, 204B, splitter / combiners 515A, 525A, 515B, 525B, phase shifters 514A, 524A, 514B, 524B, and amplifiers 513A, 523A, 513B, 523B for each of the two polorisations.

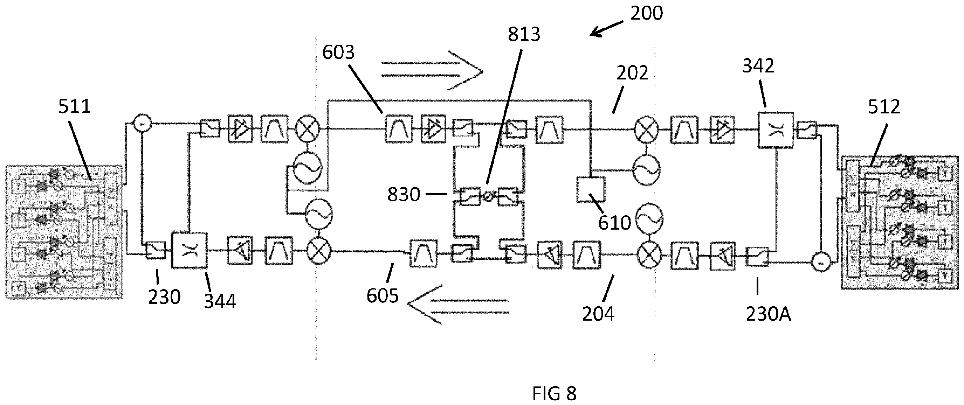

Figure 8 illustrates a seventh example of a network-controlled repeater 200, according to embodiments of the disclosure. The seventh example of a network-controlled repeater 200 may comprise some or all of the features of the first, second, third, fourth, fifth and sixth examples of a network-controlled repeater 200.

In the illustrated repeater 200, the controller 260 controls the phase of the feedback signal 324 using the phase shifter circuit 813 to optimise the self-interference cancelation. In some examples, the phase shifter circuit 813 comprises a bank of phase shifters. The illustrated phase shifter circuit 813 is shared by the first transmission pathway 202 and the second transmission pathway 204. Second switching circuitry 830 is used to switch between the phase shifter circuit 813 being part of the first transmission pathway 202, and the phase shifter circuit 813 being part of the second transmission pathway 204. The second switching circuitry 830 can be considered to be part of the switching circuitry 230. Second switching circuitry 830 is used to switch between the phase shifter circuit 813 controlling the phase of the self-interference cancelling signal 324, and the phase shifter circuit 813 controlling the phase of the second self-interference cancelling signal 326.

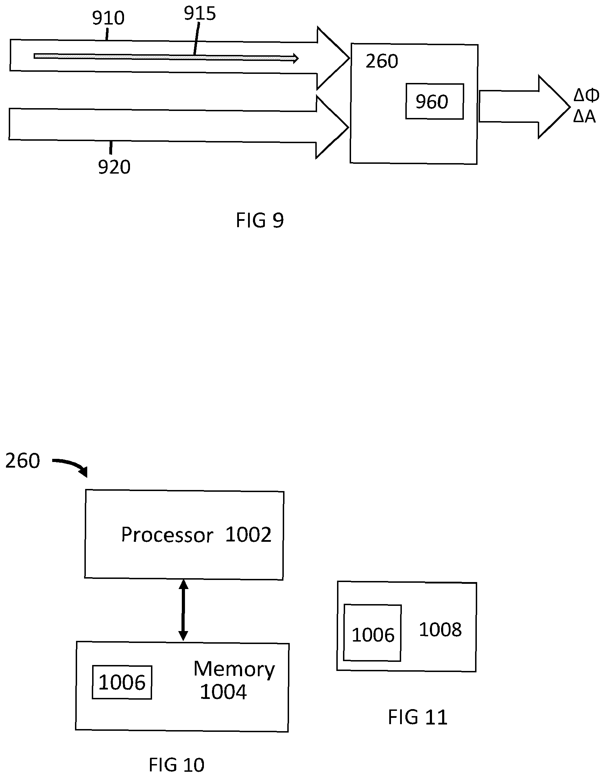

Figure 9 illustrates a controller 260 of a network-controlled repeater 200, according to embodiments of the disclosure. In this example, the controller 260 is configured to receive a control signal 910 and a reference signal 920. The control signal 910 may be part of the first signal 220 and/or the second signal 222. The reference signal 920 may be part of the first signal 220 and/or the second signal 222.

The illustrated controller 260 comprises a decoder 960 for decoding control information 910 for the repeater 200 which is received by the repeater 200. In some examples, the control information 910 is downlink control information 910.

In some but now necessarily all examples, the repeater 200 is not regenerative and the decoder 960 is not configured to decode the entire first signal 220.

The control signal 910 may comprise and/or indicate an expected reference signal 915. In some examples, the repeater 200 is configured to receive the reference signal 920, and the controller 260 is configured to control self-interference cancelation based on a comparison between the received reference signal 920 and an expected reference signal 915. The controller 260 is configured to control phase and amplitude to optimize the self-interference cancelation based on the comparison between the received reference signal 920 and the expected reference signal 915.

Providing better coverage enhances UE performance. Deploying additional cells would improve the coverage as well as the capacity in a certain area; however, such solutions are not the most preferred ones by operators due to the high cost and the limited backhaul options. Integrated access and backhaul (IAB) was introduced as a solution for coverage extension and capacity improvement, but the cost of it is high. On the other hand, another legacy solution for coverage extension has been the radio frequency (RF) repeaters 200, which can be preferred by the operators specifically due to the low cost.

Specifically, due to the degraded propagation characteristics in frequency range 2 (FR2) of new radio (NR), providing the coverage in certain deployment scenarios could be challenging. For example, serving users around the corner of a building or providing outdoor-to-indoor coverage using FR2 band might not be possible. NR repeaters 200 would be useful for serving users in aforementioned use cases, because deploying base stations or lABs might not be the most cost-efficient solution for the operators.

RF repeaters 200 are non-regenerative type of relay nodes that amplify-and forward everything that they receive, and can have no adaptive beamforming. Repeaters 200 are categorized based on their power classes (in the backhaul and access sides), and also based on the spectrum usage, e.g., single band, multi-band, etc. The main advantage of the RF repeaters 200 is that they are low cost, the ease of deployment, and no newly added latency. However, as they are simply configured to amplify the received signal, they might be amplifying the noise as well unintentionally. It is desirable to specify control functionalities to enable features for repeater 200 operation that are controlled by the network, allowing support for NR features like UE specific beam management and dynamic TDD. It is desirable that repeaters 200 are transparent to UE. A repeater 200 may be operating in FR2 with TDD and both outdoor and outdoor-to-indoor scenarios. A repeater 200 may be a single hop stationary repeater 200.

A network-controlled repeater 200 amplifies the signal 220 it receives from the gNB and forwards it to the UE, and vice-versa. Mostly, the communication links established between the gNB-repeater and repeater-UE operate in the same band (i.e., in-band operation). This in-band repeater operation is spectrally efficient; however, it has a high risk of generating self-interference (SI) 250 to one side of the repeater 200 when the other side of it is transmitting. More specifically, the powerful transmit signal of the repeater 200 couples with the receiving antenna 213, thus creating self-interference (SI) 250. This coupling between the transmit and receive antennas 213, 214 could be due to the reflection paths present in the environment/channel caused by objects 252 like walls and/or persons, and in some cases due to the direct path between the transmit and receive antennas 213, 214 (depending on the repeater 200 implementation/deployment limitations). Additionally, parasitic signal propagation from the transmit path to the receive path could also cause SI. Figure 2 shows a block diagram of a repeater 200 that operates in TDD mode, where a switch 232, 234 is used to configure the direction of the signal path, i.e., either for downlink (DL) or uplink (UL). Here, the repeater 200 amplifies-and-forwards the downlink signal. Possible coupling between the transmit and receive antennas 213, 214 for SI 250 are shown as direct (dark grey line), reflections (light grey line), and parasitic signal propagation (dashed lines), which are generating SI 250 at the receiving antenna.

One way of reducing SI 250 is by passive self-interference cancellation (SIC), i.e., by isolating the transmit and receive antennas of a repeater 200 by proper antenna deployment or implementation options. Simply, the idea here is to prevent leaking the transmitted RF signal to the receive antenna 213. For example, by introducing a repeater 200 implementation/formfactor where the access side and the backhaul side are two separate modules. This approach will ensure some amount of isolation when those two modules are separated by a concrete wall. However, passive SIC might not be a viable option in all the cases, specifically when the access and backhaul antenna units have to be implemented in the same repeater 200 form-factor. In addition, the amount of isolation obtained via antenna isolation might not sufficiently reduce the SI 250.

Active SIC can be used to further reduce the SI 250 of a repeater 200. The idea here is to subtract any remaining SI 250 from the receive path using the knowledge of the transmit signal. Active SIC can be performed both in analog and digital domains. A repeater 200 is envisioned to be a low-cost and low-latency device compared to an IAB node to improve the coverage and gain attraction from the operators due to a lower unit cost. Hence, unlike in full-duplex radios, repeaters 200 will not have a baseband (BB) signal processing functionality to perform digital domain SIC. Specifically, a repeater 200 might not be implemented with a BB processing unit to decode the control signals to be forwarded to the UEs. However, in some examples, a light baseband signal processing unit is needed for the repeater 200 to decode the dedicated control information sent by the gNB in order to only amplify-and-forward when required. For example, in a very abstract level, such required control information at the repeater 200 could be beamforming configuration and TDD operation related information. But it is worth noting that such a BB processing unit 960 would be much simpler and cheaper than those required for an IAB node (which has decode-and-forward/regenerative capability). It would be orders of magnitude simpler and cheaper, since an IAB would require N USER parallel physical downlink shared channel (PDSCH) decoding capability whereas the repeater 200 would not decode PDSCH nor UE specific physical downlink control channel (PDCCH). A network-controlled repeater 200 would decode only the control information carrying signals and channels from the gNB. In short only 1 control channel and not N parallel data and control channels. An IAB is designed to support a capacity of x users in parallel thus it has a fixed processing power designed for a max number of users. Thus, one has to rely on analog domain SIC to further reduce the SI 250 of a repeater 200.

Typically, analog SIC circuitry is implemented with an additional receiver RF front-end circuitry, and therefore incur relatively high cost, increased complexity, high component count, etc. Therefore, using additional analog SIC circuity in a repeater 200 would increase the cost and complexity of implementation (compared to lAB), and hence reducing the attraction of operators for deploying repeater 200 to improve the coverage. Thus, a problem to be solved is how the analog domain SIC can be enabled in a repeater 200 to improve isolation, while keeping the complexity and cost of the repeater 200 low.

A proposed SIC solution is to re-use the existing unused signal path of the repeater 200 to couple a portion of the transmitted signal (the SI signal) to the active receiver path for analog signal cancellation. Instead of adding a new cancellation IC, we can enable SIC operation using the existing circuitries with few additional components (couplers and switches → no need to add amplifiers or phase shifters).

We propose an RF architecture for a repeater 200 which can perform SIC in RF domain. The main feature of the proposed architecture is that the repeater 200 uses/reuses many of the existing components from traditional repeater 200 RF architecture to perform the SI cancellation. This is achieved, in at least some examples, by the following steps:
- Use the absolute phase setting of the phase shifters 514, 524 in the transmitting phased antenna array to adjust the phase of the feedback signal 324, 326 to fit (-180°) the phase of the SI signal. The angular beam steering direction of the phased antenna array is dependent of the relative phase differences between the different elements 213, 214 in the array. As such, adjusting the absolute phase of all the phase shifters 513, 514 while keeping the relative phase difference constant, will not change the angular beam steering direction, but only change the absolute phase of the feedback signal 324, 326.
- Reuse the RF couplers 342, 344 at each side of the repeater 200 (Tx & Rx) for each of the two RF paths 202, 204 (downlink and uplink) by adding a novel switching/termination circuit 230 (232, 234, four 533, the four 50 Ω terminations 531).
- Utilizing the unused RF path 202, 204 (downlink or uplink) to feedback a portion of the transmitted signal 220, 222 to the receiving point of the repeater 200, while ensuring the correct amplified power level of the SI signal.

More details of the proposed architecture will be presented in the sequel. The implementation shown in fig. 5 is for a four element antenna array, however any other number of elements 213, 214 in the antenna array is also valid.

A potential reduction of additional components needed to include SIC on a traditional repeater RF architecture is shown in Table 1 (The numbers in Table 1 are for both signal characteristics, e.g. both polarizations):

**Table 1: Reducing of components for SIC on legacy repeater RF architecture.**

| | **Number of added components** | |
|---|---|---|
| | in traditional SIC implementation | in novel and inventive implementation |
| **Phase Shifters** | 4 | 0 |
| **Amplifiers** | 5 | 0 |
| **Couplers** | 8 | 4 |
| **Switches** | 0 | 8 |

A proposed novel SIC implementation for a repeater 200 does not need any addition of expensive active components (phase shifters & amplifiers), will reduce the number of needed RF couplers 342, 344 by a factor of two, at the expense of adding eight single throw double pole (STDP) switches. This is a significant improvement in cost, complexity and required dye size.

A SIC process flow is presented below. Note that in this flow, it is assumed that the repeater 200 receives downlink signal from the gNB via a first antenna panel 511, and amplify-and-forward the DL signal via a second antenna panel 522 to the repeater 200.

| | | |
|---|---|---|
| Step 1 | The repeater 200 is already in a radio resource control (RRC) connected state, and a suitable Backhaul beam has been selected for the repeater 200 to connect with the gNB and a suitable Access beam has been selected for connect to a UE. | |
| Step 2 | The repeater 200 will wait for the next scheduled slot to be repeated | |
| Step 3 | Has the Backhaul beam or the Access beam been changed? A change in the Access beam can be due to movement of a connected UE or slot allocations for different UEs connect through different Access Beams. | |
| | | • If `Yes', the repeater 200 will continue to Step 4. |
| | | • If 'No', the repeater 200 will continue to Step 6. |
| Step 4 | The repeater 200 will re-initialize the SIC procedure, including the power levels and the phase offset, to adapt to the new beam configuration and thereby new feedback coupling. | |
| Step 5 | The repeater 200 performs fine tuning of the phase and power levels for optimizing the SIC performance. | |
| Step 6 | The repeater 200 checks if the direction of repeated signal 220 has been changed (A change between DL and UL). | |
| | | • If `Yes', the repeater 200 will continue to Step 7. |
| | | • If 'No', the repeater 200 will continue to Step 5. |
| Step 7 | Check which antenna panel 511, 512 to be used for receiving the signal 220 from gNB or UE. Based on the assumption, the first antenna panel 511 is used to receive from gNB and the second antenna panel 512 is used to receive from the UE. | |
| | | • If 'the first antenna panel' then the repeater 200 will continue to Step 8. |
| | | • If 'the second antenna panel' the repeater 200 will continue to Step 9. |
| Step 8 | Repeater 200 receives signal 220 from the gNB in the DL direction from the first antenna panel 511, and transmit it to the UE via the second antenna panel 512. A portion of the transmitted signal 220 is coupled with RF coupler 344 back to RF coupler 342 for SIC operation. Upon completion of Step 8, go back to Step 5 to proceed with the SIC fine tuning and then wait for the next slot/symbol (Step 2). Changing the direction of the repeated signal at the repeater 200 will not affect the overall SIC settings, | |
| | | since the feedback coupling can be considered reciprocal, so SIC re-initialization is not required. |
| Step 9 | | Repeater 200 receives signal 222 from UE in the UL direction from the second antenna panel 512, and transmit it the gNB via the first antenna panel 511. A portion of the transmitted signal 222 is coupled with RF coupler 342 back to RF coupler 344 for SIC operation. Upon completion of Step 9 go back to Step 5 to proceed with the SIC fine tuning and then wait for the next slot/symbol (Step 2). Changing the direction of the repeated signal at the repeater 200 will not affect the overall SIC settings, since the feedback coupling can be considered reciprocal, so SIC re-initialization is not required. |

The proposed solution utilizes the unused signal path of the repeater 200 (DL or UL path or both) to send a replica of the SI signal to the receive input. Existing "unused" circuitry and components are used whereby SIC features are enabled with only minor additional repeater hardware complexity. Using the absolute phase values of the antenna array beam steering phase shifters 514, 524 for SIC, by adjusting the phase of the radiated feedback signal. This process can be symmetrically performed in both DL and UL directions. Directional couplers 342, 344 are shared and the SIC direction is controlled by use of RF switches 232, 234, 533.

In other repeaters 200 a dedicated SIC feedback path, which needs additional phase shifter and amplifier circuitry, is needed to perform SIC operation. The proposed SIC enabled architecture is adding two RF couplers, four SPDT switches and four terminations, which could be included in the SPDT switches. The proposed architecture uses existing phase shifter and amplifier circuitry.

In the following the signal flow is described and how the SIC feedback signal 324, 326 can be injected to the directional coupler 342, 344. The repeater 200 architecture shown in fig. 6A is configured to receive a signal 220 from the backhaul side at the first antenna panel 511, amplify the received signal and repeat it on the access side at the second antenna panel 512.

The signal 220 is received with the best configured beam at the first antenna panel 511, combined and switched to the repeater 200 backhaul → access (B→A) path by controlling switches 533. On the other side, switches 533 are configured to direct signal 220 to access side via the second antenna panel 512.

A coupled feedback version of the transmitted signal 220 at the access side will be present at the backhaul side, with a certain amplitude and phase, depending on the environmental properties of the channel between the access side and the backhaul side. This feedback signal can be removed by applying the same signal at the backhaul side with the same amplitude and 180° out of phase, which can be achieved in the following way:
A switch 533 on the access side is configured for termination, whereby the RF coupler 344 will direct a portion (for example -20 dB) of the signal 220 to the access → backhaul (A→B) path. A switch 533 on the backhaul side is configured for termination, whereby the RF coupler 342 will direct a portion (for example -20 dB) of the SIC feedback signal to the B→A path. The amplifier 505 in the A→B path is used to adaptively adjust the amplitude level of the SIC feedback signal to the correct level, to match the level of the coupled feedback signal at RF coupler 342.

The phase shifters 524 are used to adaptively adjust the phase of the coupled feedback signal, so that it will be 180° out of phase at RF coupler 342.

An identical process can be carried out for a signal 222 received from the reversed direction as described below and shown in fig. 6B.

The signal 222 is received with the best configured beam at the second antenna panel 512, combined and switched to the repeater 200 A→B path by controlling switches 232, 234, 533. Switches 232, 234, 533 are configured to direct the signal 222 to backhaul side via the first antenna panel 511.

A switch 533 on the backhaul side is configured for termination, whereby the RF coupler 344 will direct a portion (for example -20 dB) of the signal 222 to the B→A path. A switch 533 on the access side is configured for termination, whereby the RF coupler 342 will direct a portion (for example -20 dB) of the SIC feedback signal 326 to the A→B path. The amplifier 503 in the B→A path is used to adaptively adjust the amplitude level of the SIC feedback signal to the correct level, to match the level of the coupled feedback signal at RF coupler 344. The phase shifters 514 are used to adaptively adjust the phase of the coupled feedback signal, so that it will be 180° out of phase at RF coupler 344.

The implementation of the phase shifters 524 and RF couplers 342, 344 needed for SIC in a repeater 200 architecture as shown in figs. 5, 6A and 6B can be done in different alternative ways:
- As an alternative to using the absolute phases values at the antenna panels 511, 512, the phase adjustments for the SIC signal could be done in the intermediate frequency domain as shown in fig. 8.
- Separate RF couplers 342, 344 could also be used instead of shared couplers 342, 344.

The phase shifter circuit 813 is used to modify the phase as required before the SIC feedback signal 324, 326 is being injected to the directional coupler 342, 344 to perform analog SIC. The phase shifter circuit 813 can be implemented as a bank of phase shifters. In practice, the channel 202, 204 between the transmit and receive antennas (i.e., the feedback channel 202, 204) may be a time varying channel. Hence, the phase and amplitude of the SIC signal 324, 326 must be carefully adjusted to match with the time varying feedback channel. The phase shifter circuit 813 can be implemented by use of a vector modulator.

The following advantages are provided:
- Reusing the existing RF architecture to perform SIC.
- Low cost, reduced complexity, and simple implementation of SIC enabled repeater 200.
- An added isolation of, for example, up to 20 to 30 dB. Especially for the more challenging case where the repeater 200 is implemented as a single enclosure.
- Antenna module frequency selectivity help to protect the RF coupler circuitry from in band or out off band blocking signals that may disturb or even saturate the feedback path.

Figure 10 illustrates an example of a controller 260 suitable for use in a repeater 200. Implementation of a controller 260 may be as controller circuitry. The controller 260 may be implemented in hardware alone, have certain aspects in software including firmware alone or can be a combination of hardware and software (including firmware).

As illustrated in fig. 10 the controller 260 may be implemented using instructions that enable hardware functionality, for example, by using executable instructions of a computer program 1006 in a general-purpose or special-purpose processor 1002 that may be stored on a computer readable storage medium (disk, memory etc.) to be executed by such a processor 1002.

The processor 1002 is configured to read from and write to the memory 1004. The processor 1002 may also comprise an output interface via which data and/or commands are output by the processor 1002 and an input interface via which data and/or commands are input to the processor 1002.

The memory 1004 stores a computer program 1006 comprising computer program instructions (computer program code) that controls the operation of the apparatus 200 when loaded into the processor 1002. The computer program instructions, of the computer program 1006, provide the logic and routines that enables the apparatus to perform the methods illustrated in the accompanying figures. The processor 1002 by reading the memory 1004 is able to load and execute the computer program 1006.

As illustrated in fig. 11, the computer program 1006 may arrive at the apparatus 200 via any suitable delivery mechanism 1008. The delivery mechanism 1008 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1006. The delivery mechanism may be a signal configured to reliably transfer the computer program 1006. The apparatus 200 may propagate or transmit the computer program 1006 as a computer data signal.

The computer program instructions may be comprised in a computer program, a non-transitory computer readable medium, a computer program product, a machine readable medium. In some but not necessarily all examples, the computer program instructions may be distributed over more than one computer program.

Although the memory 1004 is illustrated as a single component/circuitry it may be implemented as one or more separate components/circuitry some or all of which may be integrated/removable and/or may provide permanent/semi-permanent/ dynamic/cached storage.

Although the processor 1002 is illustrated as a single component/circuitry it may be implemented as one or more separate components/circuitry some or all of which may be integrated/removable. The processor 1002 may be a single core or multi-core processor.

In some examples, a network-controlled repeater 200 comprises: a first transmission pathway 202 for amplifying a first signal 220 received from at least a first antenna port 215 and transmitted by at least a second antenna port 216; a second transmission pathway 204 for amplifying a second signal 222 received from at least the second antenna port 216 and transmitted by at least the first antenna port 215; a feedback pathway 204 to modify the first signal 220 associated with the first transmission pathway 202; and a controller 260. The controller 260 comprises: at least one processor 1002; and at least one memory 1004 including computer program code 1006, the at least one memory 1004 and the computer program code 1006 configured to, with the at least one processor 1002, cause the controller 260 at least to perform: causing the first signal 220 to be propagated and amplified along the first transmission pathway 202; causing the second signal 222 to be propagated and amplified along the second transmission pathway 204; and causing a self-interference cancelling signal 324 to be propagated along the feedback pathway 304 to modify the first signal 220 associated with the first transmission pathway 202; wherein the second transmission pathway 204 is reused for the feedback pathway 304.

In some examples, a network-controlled repeater 200 comprises: a transmission pathway 202 for amplifying a signal 220 received from at least a first antenna port 215 and transmitted by at least a second antenna port 216; a feedback pathway 304 to modify the signal 220 associated with the transmission pathway 202; and a controller 260. The controller 260 comprises: at least one processor 1002; and at least one memory 1004 including computer program code 1006, the at least one memory 1004 and the computer program code 1006 configured to, with the at least one processor 1002, cause the controller 260 at least to perform: causing a signal 220 to be propagated and amplified along the transmission pathway 202; causing a self-interference cancelling signal 324 to be propagated along the feedback pathway 304 to modify the signal 220 associated with the transmission pathway 202; and controlling the phase of the signal 220 associated with the transmission pathway 202 and the amplitude of the self-interference cancelling signal 324 to produce self-interference cancelation.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

Components may be operationally coupled and any number or combination of intervening elements can exist (including no intervening elements).

Where a structural feature has been described, it may be replaced by means for performing one or more of the functions of the structural feature whether that function or those functions are explicitly or implicitly described.

In some but not necessarily all examples, the apparatus 200 is configured to communicate data from the apparatus 200 with or without local storage of the data in a memory 1004 at the apparatus 200 and with or without local processing of the data by circuitry or processors at the apparatus 200.

In this description, the wording 'couple' and its derivatives mean operationally coupled. It should be appreciated that any number or combination of intervening components can exist (including no intervening components), i.e., so as to provide direct or indirect coupling. Any such intervening components can include hardware and/or software components.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or `one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A network-controlled repeater comprising:
a first transmission pathway for amplifying a first signal received from at least a first antenna port and transmitted by at least a second antenna port;
a second transmission pathway for amplifying a second signal received from at least the second antenna port and transmitted by at least the first antenna port;
means for self-interference cancelling comprising:
a feedback pathway to modify the first signal associated with the first transmission pathway; and
a controller comprising:
means for causing the first signal to be propagated and amplified along the first transmission pathway;
means for causing the second signal to be propagated and amplified along the second transmission pathway; and
means for causing a self-interference cancelling signal to be propagated along the feedback pathway to modify the first signal associated with the first transmission pathway;
wherein the second transmission pathway is reused for the feedback pathway.

2. The network-controlled repeater as claimed in claim 1, wherein the controller is configured to control a relative phase between the first signal and the self-interference cancelling signal.

3. The network-controlled repeater as claimed in claim 2, wherein the controller is configured to control the relative phase between the first signal and the self-interference cancelling signal, wherein the control of the relative phase comprises controlling a phase of the first signal and/or a phase of the self-interference cancelling signal.

4. The network-controlled repeater as claimed in any preceding claim, wherein the controller is configured to control a phase control means in the feedback pathway and/or is configured to control a phase control means in the transmission pathway.

5. The network-controlled repeater as claimed in any preceding claim, wherein the controller is configured to control an amplitude of the self-interference cancelling signal in the feedback pathway.

6. The network-controlled repeater as claimed in any preceding claim, wherein the controller is configured to independently control a relative phase between the first signal and the self-interference cancelling signal and an amplitude of the self-interference cancelling signal to produce self-interference cancelation.

7. The network-controlled repeater as claimed in any preceding claim, wherein the controller is configured to control a relative phase between the first signal and the self-interference cancelling signal and an amplitude of the self-interference cancelling signal to optimise self-interference cancelation.

8. The network-controlled repeater as claimed in any preceding claim, wherein the repeater is configured to receive a reference signal, and the controller is configured to control self-interference cancelation based on a comparison between the received reference signal and an expected reference signal.

9. The network-controlled repeater as claimed in any preceding claim, further comprising at least a first antenna element and a second antenna element, and at least a first phase shifter and a second phase shifter, wherein the first phase shifter is configured to control a phase of at least a part of the first signal received by the first antenna element and/or is configured to control at least a part of the second signal transmitted by the first antenna element,
and the second phase shifter is configured to control a phase of at least a part of the first signal transmitted by the second antenna element and/or at least a part of the second signal received by the second antenna element.

10. The network-controlled repeater as claimed in any preceding claim, wherein the means for causing the first signal to be propagated and amplified comprises at least a first coupler and a second coupler, wherein the first coupler is shared between the first transmission pathway and the second transmission pathway and the second coupler is shared between the first transmission pathway and the second transmission pathway.

11. The network-controlled repeater as claimed in claim 10, further comprising switching circuitry to enable alternate use of the first coupler for out-coupling from the first transmission pathway and in-coupling to the second transmission pathway and, synchronised, alternate use of the second coupler for in-coupling to the first transmission pathway and out-coupling from the second transmission pathway.

12. The network-controlled repeater as claimed in any preceding claim, wherein the means for self-interference cancelling further comprises a second feedback pathway to modify the second signal associated with the second transmission pathway; wherein the controller further comprises means for causing a second self-interference cancelling signal to be propagated along the second feedback pathway to modify the second signal associated with the second transmission pathway; wherein the first transmission pathway is reused for the second feedback pathway.

13. A network-controlled repeater as claimed in claim 10, 11, or 12, wherein, during a first time division duplex time slot, the first coupler is configured to out-couple a portion of the first signal into the feedback pathway from the first transmission pathway, and the second coupler is configured to in-couple at least a portion of a self-interference cancelling signal from the feedback pathway into the first transmission pathway and during a second time division duplex time slot, the second coupler is configured to out-couple a portion of the second signal into a second feedback pathway, and the first coupler is configured to in-couple at least a portion of a self-interference cancelling signal from the second feedback pathway into the second transmission pathway.

14. The network-controlled repeater as claimed in any preceding claim, further comprising: a third transmission pathway for amplifying a third signal received from at least the first antenna port and transmitted by at least the second antenna port;
a fourth transmission pathway for amplifying a fourth signal received from at least the second antenna port and transmitted by at least the first antenna port; and
wherein the means for self-interference cancelling further comprises: a further feedback pathway to modify the third signal associated with the third transmission pathway;
wherein the controller further comprises:
means for causing the third signal to be propagated and amplified along the third transmission pathway;
means for causing the fourth signal to be propagated and amplified along the fourth transmission pathway; and
means for causing a further self-interference cancelling signal to be propagated along the further feedback pathway to modify the third signal associated with the third transmission pathway;
wherein the fourth transmission pathway is reused for the further feedback pathway.
